# EUROPEAN PATENT APPLICATION

(11) **EP 3 236 014 A1**
(43) Date of publication of application: **25.10.2017**
(21) Application number: 17167499.7
(22) Date of filing: 21.04.2017
(51) Int. Cl.: F01D 9/02, F01D 25/00, F01D 5/04, F01D 25/12

(54) **ARTICLE, COMPONENT, AND METHOD OF MAKING A COMPONENT OF A GAS TURBINE ENGINE**

(30) Priority: 21.04.2016 US 201615134813
(71) Applicant: General Electric Company, Schenectady, NY 12345 (US)
(72) Inventor: HOSKIN, Robert Frank, Duluth, GA 30096 (US)
(74) Representative: Lee, Brenda

(57) **Abstract**

An article 201, a component 100, and a method of making a component 100 are provided. The article 201 includes a pre-sintered preform having a contoured proximal face 202 and a contoured distal face 203. The contoured proximal face 202 is arranged and disposed to substantially mirror a contour of an end wall of a component 100 and the contoured distal face 203 is arranged and disposed to form an exterior surface including a modified surface characteristic. The component 100 includes a first end wall 105, a second end wall 107, and an article 201 secured to at least one of the first end wall 105 and the second end wall 107, the article 201 including a pre-sintered preform having a contoured proximal face 202 and a contoured distal face 203. The contoured proximal face 202 substantially mirrors a contour of at least one of the first end wall 105 and the second end wall 107, and the contoured distal face 203 is arranged and disposed to form an exterior surface thereover.

## Description

### FIELD OF THE INVENTION

The present embodiments are directed to an article, a component, and a method of making a component. More specifically, the present embodiments are directed to a contoured article, a component including a contoured article, and a method of making a component including a contoured article.

### BACKGROUND OF THE INVENTION

During operation, high-temperature combustion gases flow through different portions of many gas turbine engines. These high-temperature combustion gases flow over and/or adjacent to various hot gas path components within the gas turbine engine, exposing the components to elevated temperatures during normal operation. As gas turbines are modified to increase efficiency and decrease cost, the temperatures within the hot gas path are being increased while the geometries of the components are becoming more complex. In order to continue increasing the temperatures within the hot gas path, the turbine components in this area must be constructed of materials which can withstand such temperatures.

Some hot gas path components may include one or more sheets of material applied over a portion or portions of the underlying component. For example, during pre-sintered preform (PSP) fabrication, one or more sheets of material are brazed onto a component, such as a nozzle or airfoil. The sheets are usually overlaid then brazed onto the component to form an external surface or skin. Typically, the sheets are flat, or include a curvature that is generally similar to the overall shape of the component to which they will be attached, although, through pressure, bending, and the like, these flat sheets may be conformed to the underlying component during the attachment process.

Additionally, many components fabricated with overlaid sheets, such as PSP, may include small cooling channels or microchannels adjacent the overlaid sheets. For example, in PSP fabrication the underlying component may have one or more grooves formed on the surface. When the overlay sheet is attached, a series of individual and/or interconnected passages may be formed, the passages providing the cooling channels and/or microchannels which permit a flow of cooling fluid therein. These channels may be near the surface of the completed component, at a distance comparable to the thickness of the overlay sheet, and may provide heat transfer from the outer surface of the skin into the channel cooling flow.

However, when fabricated according to current methods, the conforming of the flat sheet to the contoured end wall may form gaps in the bond interface between the material and the end wall. The gaps are often filled with air, which decreases heat transfer between the material and the end wall. This decrease in heat transfer decreases cooling effectiveness in the nozzle, such as, for example, through cooling microchannels formed in the body thereof. The decrease in cooling effectiveness may also decrease efficiency of the turbine system and/or increase operating cost. Furthermore, during the conforming of the flat sheet to the contoured end wall, the material of the flat sheet may encroach upon the grooves in the component. While the encroaching material may be removed through various methods, such as machining, the removal of the material increases cost, decreases manufacturing efficiency, and/or decreases manufacturing output.

### SUMMARY OF THE INVENTION

In an embodiment, an article includes a pre-sintered preform having a contoured proximal face, including at least one groove, and a contoured distal face. The contoured proximal face is arranged and disposed, aside from the at least one groove, to substantially mirror a contour of an end wall of a component. The contoured distal face is arranged and disposed to form an exterior surface, the exterior surface including a modified surface characteristic.

In another embodiment, a component includes a first end wall, a second end wall, and an article secured to at least one of the first end wall and the second end wall, the article including a pre-sintered preform having a contoured proximal face and a contoured distal face. The contoured proximal face substantially mirrors a contour of at least one of the first end wall and the second end wall, and the contoured distal face is arranged and disposed to form an exterior surface over the first end wall or the second end wall, the exterior surface including a modified surface characteristic.

In another embodiment, a method of making a component includes forming an article including a pre-sintered preform having a proximal face and a distal face, contouring the proximal face of the article to form a contoured proximal face, contouring the distal face of the article to form a contoured distal face, and securing the contoured proximal face of the article to one of a first end wall and a second end wall of the component. Prior to the step of securing, the contoured proximal face substantially mirrors a contour of at least one of the first end wall and the second end wall of the component. After the step of securing, the contoured distal face forms an exterior surface over at least one of the first end wall and the second end wall, the exterior surface including a modified surface characteristic.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

FIG. 1 is perspective view of a component, according to an embodiment of the disclosure.
FIG. 2 is a perspective view of an article positioned over a portion of the component of FIG. 1, according to an embodiment of the disclosure.
FIG. 3 is perspective view of an article positioned over a portion of a component, according to an embodiment of the disclosure.
FIG. 4 is a process view of a method of forming a component, according to an embodiment of the disclosure.
FIG. 5 is an enlarged process view of a prior art method of forming a component.
FIG. 6 is a perspective view of an article, according to an embodiment of the disclosure.
FIG. 7 is an enlarged process view of a method of forming a component including cooling channels, according to an embodiment of the disclosure.
FIG. 8 is an enlarged process view of a method of forming a component including cooling channels, according to another embodiment of the disclosure.
FIG. 9 is a process view of a method of forming a component, according to another embodiment of the disclosure.

Wherever possible, the same reference numbers will be used throughout the drawings to represent the same parts.

### DETAILED DESCRIPTION OF THE INVENTION

Provided are an article, a component, and a method of making a component. Embodiments of the present disclosure, for example, in comparison to concepts failing to include one or more of the features disclosed herein, decrease or eliminate the formation of gaps within a component, increase cooling effectiveness of a component, provide a closer tolerance between components and braze sheets, increase joint quality between braze sheets and components, increase component life, increase manufacturing efficiency, increase manufacturing yield, facilitate use of increased system temperatures, increase system efficiency, or a combination thereof.

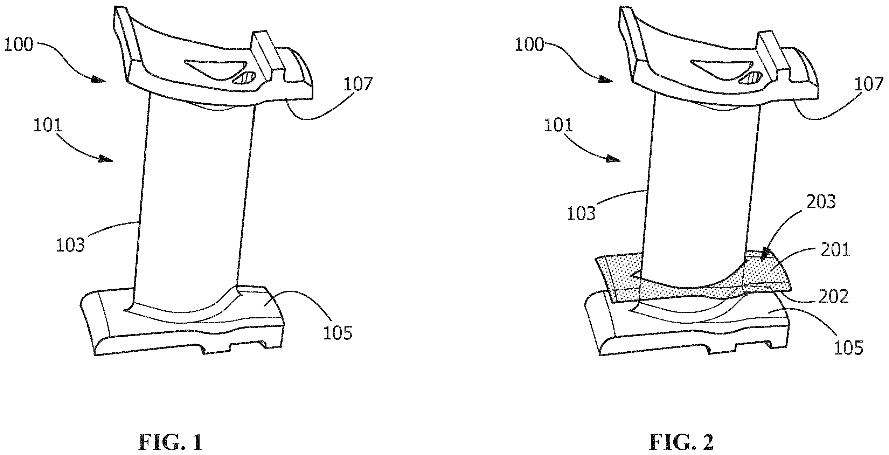

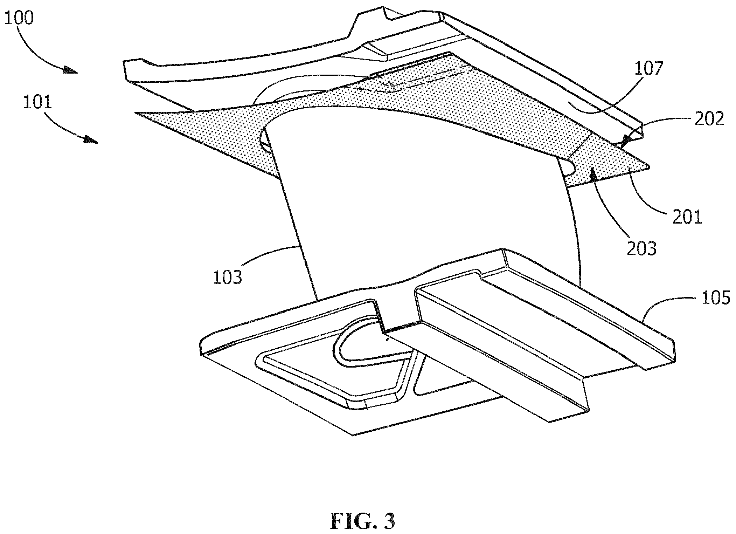

Referring to FIG. 1, a component 100 includes any combustion and/or turbine component having surfaces that are exposed to elevated temperatures, such as, but not limited to, a shroud, a blade, a bucket, any other hot gas path component, or a combination thereof. For example, in one embodiment, the component 100 includes a nozzle 101 configured for use in a hot gas path of a turbine engine. In another embodiment, the nozzle 101 includes an airfoil portion 103 positioned between a first end wall 105 and a second end wall 107. In a further embodiment, as illustrated in FIGS. 2-3, the component 100 includes at least one article 201 secured to the first end wall 105 (FIG. 2) and/or the second end wall 107 (FIG. 3) thereof. Although shown in FIGS. 2-3 as being secured to either the first end wall 105 or the second end wall 107, as will be appreciated by those skilled in the art, the disclosure is not so limited and may include at least one of the articles 201 secured to each of the first end wall 105 and/or the second end wall 107. A component end wall 105, 107 may have a circumferential radius measurable with respect to the centerline or rotor axis of a turbine engine.

The article 201 may be secured to the first end wall 105 and/or the second end wall 107 through any suitable method, such as, but not limited to, brazing, sintering, welding, or a combination thereof. In one embodiment, the article 201 includes a single article secured to each of the first end wall 105 and/or the second end wall 107. In another embodiment, the article 201 includes a plurality of cooperating articles secured to each of the first end wall 105 and/or the second end wall 107. In a further embodiment, the plurality of cooperating articles 201 are positioned adjacent one another to cover a selected area of the component 100. Each of the plurality of cooperating articles may be shaped and/or sized to include corresponding adjacent edges and/or interlocking features.

In one embodiment, the article 201 includes a contoured proximal face 202 and a contoured distal face 203. The contoured proximal face 202 and/or the contoured distal face 203 are formed through any suitable method, such as, but not limited to, fabricating the article 201 to a net non-flat shape using an additive and/or three-dimensional (3D) printing method, contouring of the article 201 during manufacturing, contouring of the article 201 after manufacturing, bending of the article 201, machining of the article 201, or a combination thereof. The contoured proximal face 202 and the contoured distal face 203 may also be formed simultaneously or separately, and include the same, substantially the same, or different shapes and/or contours. For example, both the shape and/or geometry of the contoured proximal face 202 and the contoured distal face 203 may be formed during production of the article 201, or the article 201 may be manipulated to form the shape and/or geometry of the contoured proximal face 202, then the contoured distal face 203 may be machined or otherwise processed to form the shape and/or geometry of the contoured distal face 203.

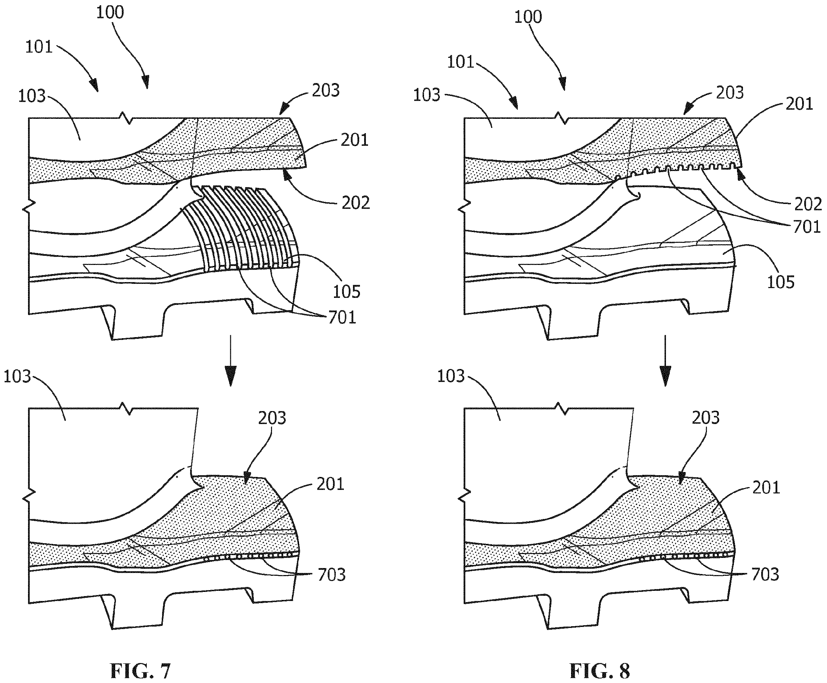

In some embodiments, a method of making a component 100 includes forming an article 201 having a proximal face and a distal face, contouring the proximal face of the article to form a contoured proximal face 202, contouring the distal face of the article 201 to form a contoured distal face 203, and securing the contoured proximal face 202 of the article 201 to one of a first end wall 105 and a second end wall 107 of the component 100. Prior to the step of securing, the contoured proximal face 202 substantially mirrors a contour of at least one of the first end wall 105 and the second end wall 107 of the component 100. One or both of the component end walls 105, 107 may have one or more small grooves 701 (see FIG. 7) near their surfaces. After the step of securing, the contoured distal face 203 forms an exterior surface over at least one of the first end wall 105 and the second end wall 107, the exterior surface including a modified surface characteristic, and the exterior surface may have near-surface cooling channels 703 (see FIG. 7) in close proximity to the exterior surface.

In some embodiments, the article 201 includes a pre-sintered preform (PSP) material. In some embodiments, the resulting end wall external surfaces formed using precurved PSP sheets include 3D contouring defined by varying radial deviations from a circumferentially uniform radius, the component 100 further including near-surface cooling channels 703 that follow, slightly under the surface, the end wall 3D contouring. In some embodiments, the article 201 has a substantially uniform thickness. In other embodiments, however, the thickness of the article 201 may vary based on the peaks and trenches on the distal face 203 of the article 201. In some embodiments, the thickness of the article 201 is in the range of 100 µm to 3 mm, alternatively in the range of 100 to 500 µm, alternatively in the range of 500 µm to 1 mm, alternatively in the range of 1 to 2 mm, alternatively in the range of 2 to 3 mm, or any range or sub-range therebetween. As used herein, "near-surface cooling" refers to cooling with cooling channels 703 defined by grooves 701 in the component end wall 105, 107 or the proximal face 202. Thus, the cooling channels 703 are located within a distance of the distal face 203 that is no greater than the thickness of the article 201.

In some embodiments, the modified surface characteristic includes a contoured aerodynamic surface or a three-dimensional aerodynamic shape. In many components it may be desirous to have a particular three-dimensional aerodynamic shape formed on the surface of the component, such as a contoured shape on a nozzle 101 end wall, and also provide near-surface microchannels for superior near-surface cooling.

In some embodiments, a method of making a component 100 includes forming an article 201 having a proximal face and a distal face, contouring the proximal face of the article to form a contoured proximal face 202, contouring the distal face of the article to form a contoured distal face 203, and securing the contoured proximal face 202 of the article 201 to one of a first end wall 105 and a second end wall 107 of the component 101. Prior to the step of securing, the contoured proximal face 202 substantially mirrors a contour of at least one of the first end wall 105 and the second end wall 107 of the component 100. The proximal face may include one or more small grooves 701 therein. After the step of securing, the contoured distal face 203 forms an exterior surface over at least one of the first end wall 105 and the second end wall 107, the exterior surface including a modified surface characteristic, and the component 100 includes near-surface cooling channels 703.

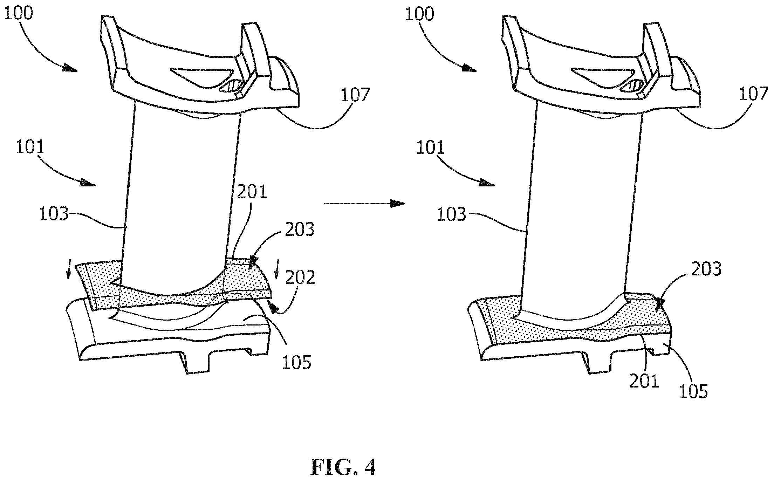

Referring to FIGS. 4-9, the contoured proximal face 202 is arranged and disposed for securing the article 201 directly or indirectly to the first end wall 105 and/or the second end wall 107 of the component 100. For example, in one embodiment, as illustrated in FIG. 4, the contoured proximal face 202 is secured directly to the first end wall 105 and/or the second end wall 107, and includes a shape and/or contour that, prior to securing the article 201 to the first end wall 105 and/or the second end wall 107, mirrors or substantially mirrors the shape and/or contour of the first end wall 105 and/or the second end wall 107. By "mirrors" or "substantially mirrors" it is meant that the contoured proximal face 202 of the article 201 has a geometry that follows a geometry of the first end wall 105 and/or the second end wall 107, providing direct contact between the surfaces thereof.

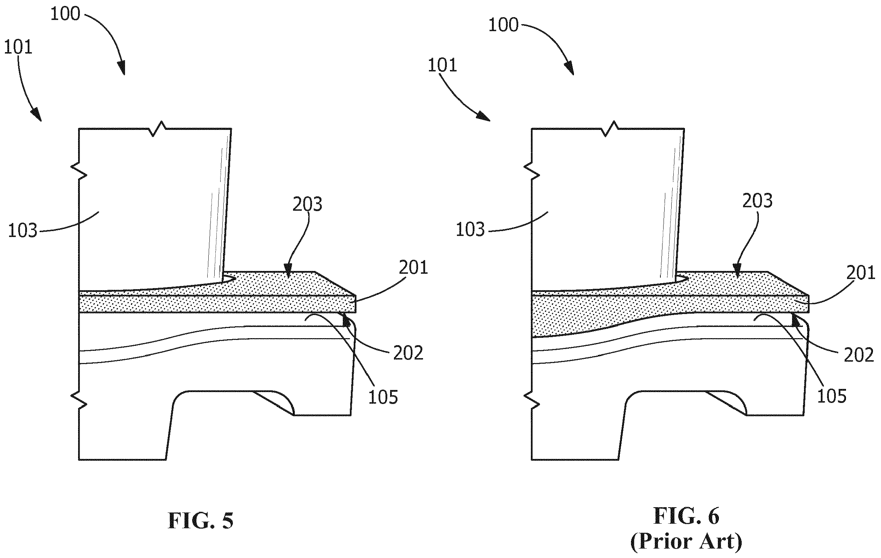

In contrast to a flat face 501 (FIG. 5) that conforms to an end wall during the securing process, the shape and/or contour of the contoured proximal face 202 provides a closer tolerance between the article 201 and the first end wall 105 and/or the second end wall 107 (FIG. 4). The closer tolerance provided by the article 201 decreases or eliminates the formation of gaps and/or increases joint quality between the article 201 and the first end wall 105 and/or the second end wall 107. This increases manufacturing yield of the component 100, increases a life cycle of the component 100, increases cooling effectiveness of the component 100, or a combination thereof.

The contoured distal face 203, which is positioned opposite or substantially opposite the contoured proximal face 202 with respect to the article 201, forms an exterior surface over the first end wall 105 and/or the second end wall 107. The exterior surface formed by the contoured distal face 203 may be the same, substantially the same, or different from the shape and/or contour of the contoured proximal face 202, and includes any suitable shape and/or contour for providing a modified surface characteristic over the first end wall 105 and/or the second end wall 107.

For example, in one embodiment, as illustrated in FIG. 6, the contoured proximal face 202 is arranged and disposed to mirror the first end wall 105 and/or the second end wall 107, while the contoured distal face 203 is arranged and disposed to form a modified surface characteristic, including a contoured aerodynamic surface over the first end wall 105 and/or the second end wall 107. In another embodiment, the contoured aerodynamic surface is contoured in elevation relative to a conventional axisymmetric or circular circumferential end wall to reduce adverse aerodynamic effects, including adverse effects of vortices generated as high-temperature gases flow adjacent and around an airfoil portion of the component. In a further embodiment, the contoured aerodynamic surface is contoured in radial elevation to include 3D-contouring features, such as peaks, humps, bumps, trenches, troughs, and/or any other feature for contoured end walls. In some embodiments, the 3D contouring includes varying radial deviations from a circumferentially uniform radius. As noted previously, a circumferential radius is preferably defined with respect to the centerline or rotor axis of the turbine engine.

Additionally or alternatively, as illustrated in FIGS. 7-8, the article 201 and the first end wall 105 and/or the second end wall 107 are arranged and disposed to form one or more near-surface cooling channels 703 in the component 100. Referring to FIG. 7, in one embodiment, at least one groove 701 is formed in the first end wall 105 and/or the second end wall 107. The article 201 is positioned over the at least one groove 701 and directly or indirectly secured to the first end wall 105 and/or the second end wall 107 in which the at least one groove 701 is formed. When secured to the first end wall 105 and/or the second end wall 107, the article 201 covers the at least one groove 701, forming the one or more near-surface cooling channels 703 in the component 100. Referring to FIG. 8, in another embodiment, the at least one groove 701 is formed in the contoured proximal face 202 of the article 201. When secured to the first end wall 105 and/or the second end wall 107, the at least one groove 701 in the article 201 forms the one or more near-surface cooling channels 703 in the component 100. Although described herein as being formed in either the article 201 or the end wall 105,107, as will be appreciated by those skilled in the art, the disclosure is not so limited and may include the at least one groove 701 formed in the article 201, or both the article 201 and the end wall 105,107. The groove(s) 701 formed in the article 201 and the end wall 105,107 may be aligned and/or staggered to form the one or more near-surface cooling channels 703 when the article 201 is secured to the end wall 105,107.

In certain embodiments, the size, placement, and/or density of the near-surface cooling channels 703 may be arranged to provide more or less cooling depending upon the heat loads associated with various features of the contoured surface. For example, the cooling channels 703 in portions of the component 100 having higher elevations and/or increased heat loads (e.g., increased local heat transfer coefficient), such as peaks or bumps, may be arranged and disposed to provide relatively higher cooling flow, while the cooling channels 703 in portions of the component 100 having lower elevations and/or decreased heat loads (e.g., decreased local heat transfer coefficient), such as trenches or troughs, may be arranged and disposed to provide relatively lower cooling flow.

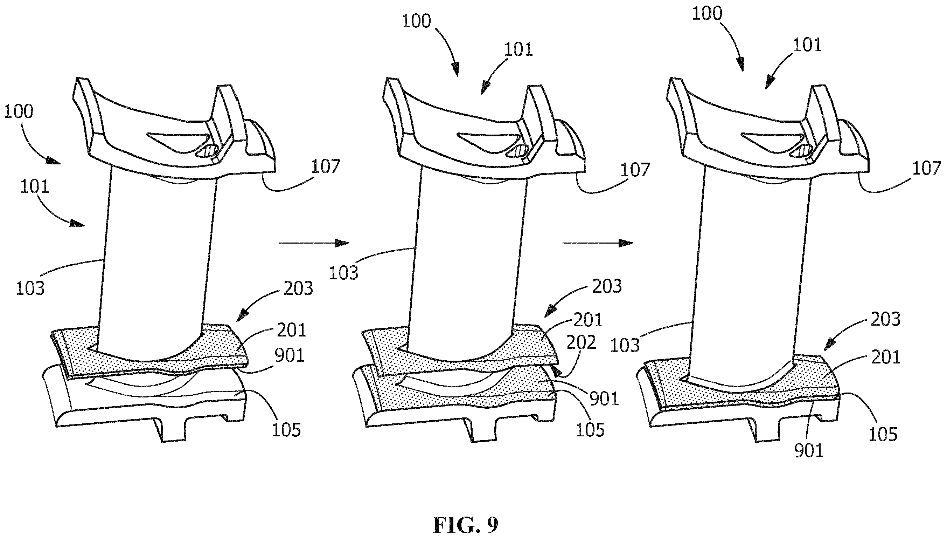

Turning to FIG. 9, in one embodiment, at least one intermediate member 901 is positioned between the article 201 and the first end wall 105 and/or the second end wall 107. The intermediate member 901 includes any material or combination of materials suitable for indirectly securing the article 201 to the first end wall 105 and/or the second end wall 107. For example, in one embodiment, the intermediate members 901 include a paste, slurry, powder, or other material configuration for facilitating the securing of the article 201 to the first end wall 105 and/or the second end wall 107. Other intermediate materials include any material suitable for use with PSP compositions. In another embodiment, the intermediate member 901 includes a first surface and a second surface that are arranged and disposed to indirectly secure the article 201 to the first end wall 105 and/or the second end wall 107. In a further embodiment, when the article 201 is indirectly secured to the first end wall 105 and/or the second end wall 107 through the intermediate member 901, the contoured distal face 203 forms the exterior surface over the first end wall 105 and/or the second end wall 107.

Prior to securing, the first surface of the intermediate member 901 includes a shape and/or contour that mirrors or substantially mirrors the shape and/or contour of the first end wall 105 and/or the second end wall 107, and the second surface of the intermediate member 901 includes a shape and/or contour that mirrors or substantially mirrors the shape and/or contour of the contoured proximal face 202 of the article 201. When the first surface of the intermediate member 901 is secured to the first end wall 105 and/or the second end wall 107, the second surface of the intermediate member 901 provides an intermediate surface over the first end wall 105 and/or the second end wall 107. The intermediate surface facilitates securing of the contoured proximal face 202 thereto, which, in combination with the contoured proximal face 202, provides closer tolerance between the article 201 and the first end wall 105 and/or the second end wall 107, as compared to the flat surface 503 shown in FIG. 5. Additionally, the intermediate member 901 may include one or more grooves 701 formed therein, the one or more grooves 701 being arranged and disposed to form at least one of the near-surface cooling channels 703 in the component 100.

According to one or more of the embodiments disclosed herein, the materials of the component 100 and the article 201 include any suitable material or combination of materials for use in a combustion and/or turbine system, including, but not limited to, any known substrate and/or PSP material. For example, in one embodiment, the component 100 includes any suitable material having any suitable microstructure for continuous use in a turbine engine and/or within the hot gas path of the turbine engine. Suitable microstructures include, but are not limited to, equiaxed, directionally solidified (DS), single crystal (SX), or a combination thereof. Suitable materials of the component 100 include, but are not limited to, a metal, a ceramic, an alloy, a superalloy, steel, a stainless steel, a tool steel, nickel, cobalt, chrome, titanium, aluminum, or a combination thereof.

One suitable material of the component 100 is a cobalt-based material including, but not limited to, a composition, by weight, of about 29% chromium (Cr), about 10% nickel (Ni), about 7% tungsten (W), about 1% iron (Fe), about 0.25% carbon (C), about 0.01% boron (B), and balance cobalt (Co) (e.g., FSX414); about 20% to about 24% Cr, about 20% to about 24% Ni, about 13% to about 15% W, about 3% Fe, about 1.25% manganese (Mn), about 0.2% to about 0.5% silicon (Si), about 0.015% B, about 0.05% to about 0.15% C, about 0.02% to about 0.12% lanthium (La), and balance Co (e.g., HAYNES^{®} 188); about 22.5% to about 24.25% Cr, about 9% to about 11% Ni, about 6.5% to about 7.5% W, about 3% to about 4% Ta, up to about 0.3% titanium (Ti) (e.g., about 0.15% to about 0.3% Ti), up to about 0.65% C (e.g., about 0.55% to about 0.65% C), up to about 0.55% zirconium (Zr) (e.g., about 0.45% to about 0.55% Zr), and balance Co (e.g., Mar-M-509); about 20% Ni, about 20% Cr, about 7.5% Ta, about 0.1% Zr, about 0.05% C, and balance Co (e.g., Mar-M-918).

Another suitable material of the component 100 is a nickel-based material including, but not limited to, a composition, by weight, of about 9.75% Cr, about 7.5% Co, about 6.0% W, about 4.2% aluminum (Al), about 3.5% Ti, about 1.5% molybdenum (Mo), about 4.8% Ta, about 0.5% niobium (Nb), about 0.15% hafnium (Hf), about 0.05% C, about 0.004% B, and a balance of Ni (e.g., René N4); about 7.5% Co, about 7.0% Cr, about 6.5% Ta, about 6.2% Al, about 5.0% W, about 3.0% rhenium (Re), about 1.5% Mo, about 0.15% Hf, about 0.05% C, about 0.004% B, about 0.01% yttrium (Y), and a balance of Ni (e.g., René N5); between about 9% and about 10% Co, between about 9.3% and about 9.7% W, between about 8.0% and about 8.7% Cr, between about 5.25% and about 5.75% Al, between about 2.8% and about 3.3% Ta, between about 1.3% and about 1.7% Hf, up to about 0.9% Ti (for example, between about 0.6% and about 0.9%), up to about 0.6% Mo (for example, between about 0.4% and about 0.6%), up to about 0.2% Fe, up to about 0.12% Si, up to about 0.1% Mn, up to about 0.1 % copper (Cu), up to about 0.1 % C (for example, between about 0.07% and about 0.1%), up to about 0.1% Nb, up to about 0.02% Zr (for example, between about 0.005% and about 0.02%), up to about 0.02% B (for example, between about 0.01% and about 0.02%), up to about 0.01% phosphorus (P), up to about 0.004% sulfur (S), and a balance of Ni (e.g., René 108); about 13.70% to about 14.30% Cr, about 9.0% to about 10.0% Co, about 4.7% to about 5.1% Ti, about 3.5% to about 4.1% W, about 2.8% to about 3.2% Al, about 2.4% to about 3.1% Ta, about 1.4% to about 1.7% Mo, 0.35% Fe, 0.3% Si, about 0.15% Nb, about 0.08% to about 0.12% C, about 0.1% Mn, about 0.1% Cu, about 0.04% Zr, about 0.005% to about 0.020% B, about 0.015% P, about 0.005% S, and a balance of Ni (e.g., GTD-111^{®}, available from General Electric Company); about 22.2 to about 22.8% Cr, about 18.5 to about 19.5% Co, about 2.3% Ti, about 1.8 to about 2.2% W, about 1.2% Al, about 1.0% Ta, about 0.8% Nb, about 0.25% Si, about 0.08 to about 0.12% C, about 0.10% Mn, about 0.05% Zr, about 0.008% B, and balance Ni (e.g., GTD-222^{®}, available from General Electric Company); about 9.75% Cr, about 7.5% Co, about 6.0% W, about 4.2% Al, about 4.8% Ta, about 3.5% Ti, about 1.5% Mo, about 0.08% C, about 0.009% Zr, about 0.009% B, and a balance of Ni (e.g., GTD-444^{®}, available from General Electric Company); about 15.70% to about 16.30% Cr, about 8.00% to about 9.00% Co, about 3.20% to about 3.70% Ti, about 3.20% to about 3.70% Al, about 2.40% to about 2.80% W, about 1.50% to about 2.00% Ta, about 1.50% to about 2.00% Mo, about 0.60% to about 1.10% Nb, up to about 0.50% Fe, up to about 0.30% Si, up to about 0.20% Mn, about 0.15% to about 0.20% C, about 0.05% to about 0.15% Zr, up to about 0.015% S, about 0.005% to about 0.015% B, and a balance nickel (e.g., INCONEL^{®} 738); about 9.3% to about 9.7% W, about 9.0% to about 9.5% Co, about 8.0% to about 8.5% Cr, about 5.4% to about 5.7% Al, up to about 0.25% Si, up to about 0.1% Mn, about 0.06% to about 0.09% C, incidental impurities, and a balance Ni (e.g., Mar-M-247).

Another suitable material of the component 100 is an iron-based material including, but not limited to, a composition, by weight, of about 50% to about 55% nickel and cobalt combined, about 17% to about 21% chromium, about 4.75% to about 5.50% niobium and tantalum combined, about 0.08% carbon, about 0.35% manganese, about 0.35% silicon, about 0.015% phosphorus, about 0.015% sulfur, about 1.0% cobalt, about 0.35% to 0.80% aluminum, about 2.80% to about 3.30% molybdenum, about 0.65% to about 1.15% titanium, about 0.001% to about 0.006% boron, about 0.15% copper, and balance of iron (e.g., INCONEL^{®} 718). Other materials of the component 100 include, but are not limited to, a CoCrMo alloy, such as, for example, 70Co-27Cr-3Mo; a ceramic matrix composite (CMC), or a combination thereof.

"INCONEL" is a federally registered trademark of alloys produced by Huntington Alloys Corporation, Huntington, West Virginia. "HAYNES" is a federally registered trademark of alloys produced by Haynes International, Inc., Kokomo, Indiana.

In another embodiment, the article 201 includes any material suitable for being secured to the first end wall 105 and/or the second end wall 107, and/or for continuous use in a turbine engine and/or within the hot gas path of the turbine engine. The material of the article 201 may be the same, substantially the same, or different from the material of the component 100. In one embodiment, the material of the article 201 includes any suitable PSP material. In another embodiment, the PSP material contains at least two materials with various mixing percentages. A first material includes, for example, any of the materials suitable for the hot-gas path of a turbine system disclosed herein. A second material includes, for example, a braze alloy, such as, but not limited to, a nickel braze alloy material having a composition, by weight, of between about 13% and about 15% chromium, between about 9% and about 11% cobalt, between about 2.25% and about 2.75% tantalum, between about 3.25% and about 3.75% aluminum, between about 2.5% and about 3% boron, up to about 0.1 % yttrium (for example, between about 0.02% and about 0.1 % yttrium), and a balance of nickel; or between about 18.5% and about 19.5% chromium, between about 9.5% and about 10.5% silicon, about 0.1% cobalt, about 0.03% boron, about 0.06% carbon, and a balance of nickel.

While the invention has been described with reference to one or more embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. In addition, all numerical values identified in the detailed description shall be interpreted as though the precise and approximate values are both expressly identified.

Various aspects and embodiments of the present invention are defined by the following numbered clauses:
1. An article comprising:
   a pre-sintered preform having:
      a contoured proximal face having at least one groove; and
      a contoured distal face;
         wherein the contoured proximal face is arranged and disposed, aside from the at least one groove, to substantially mirror a contour of an end wall of a component; and
         wherein the contoured distal face is arranged and disposed to form an exterior surface, the exterior surface including a modified surface characteristic.
2. The article of clause 1, wherein a contour of the contoured distal face differs from a contour of the contoured proximal face.
3. The article of any preceding clause, wherein the contour of the contoured distal face includes three-dimensional contouring comprising varying radial deviations from a circumferentially uniform radius.
4. The article of any preceding clause, wherein the modified surface characteristic includes a contoured aerodynamic surface.
5. The article of any preceding clause, wherein the at least one groove is arranged and disposed to form at least one cooling channel when the article is positioned over the end wall.
6. The article of any preceding clause, wherein the at least one groove is arranged and disposed to follow the contour of the end wall of the component.
7. The article of any preceding clause, wherein the modified surface characteristic comprises a contoured aerodynamic surface comprising at least one peak and at least one trench, the at least one groove comprises a plurality of grooves, and the plurality of grooves are arranged closer together below the at least one peak than below the at least one trench to provide greater near-surface cooling of the at least one peak.
8. A component comprising:
   a first end wall;
   a second end wall; and
   an article secured to at least one of the first end wall and the second end wall, the article comprising a pre-sintered preform having:
      a contoured proximal face; and
      a contoured distal face;
         wherein the contoured proximal face substantially mirrors a contour of at least one of the first end wall and the second end wall; and
         wherein the contoured distal face is arranged and disposed to form an exterior surface over the first end wall or the second end wall, the exterior surface including a modified surface characteristic.
9. The component of any preceding clause, wherein a contour of the contoured distal face differs from a contour of the contoured proximal face.
10. The component of any preceding clause, wherein a contour of the contoured distal face includes three-dimensional contouring comprising varying radial deviations from a circumferentially uniform radius.
11. The component of any preceding clause, further comprising at least one groove formed in a portion of the component selected from the group consisting of the first end wall, the second end wall, the contoured proximal face, and combinations thereof.
12. The component of any preceding clause, wherein the at least one groove is arranged and disposed to form a cooling channel in the component.
13. The component of any preceding clause, wherein the at least one groove is arranged and disposed to follow the contour of at least one of the first end wall and the second end wall.
14. The component of any preceding clause, wherein the at least one groove comprises a plurality of grooves arranged and disposed to provide differing fluid flows within three-dimensional contouring features of the contoured distal face.
15. The component of any preceding clause, wherein the plurality of grooves form a relatively increased density of cooling channels within the three-dimensional contouring features having increased heat loads.
16. The component of any preceding clause, where the component is a hot gas path component of a gas turbine.
17. The component of any preceding clause, wherein the component is a nozzle, the nozzle further comprising an airfoil portion positioned between the first end wall and the second end wall.
18. A method of making a component, the method comprising:
   forming an article including a pre-sintered preform having a proximal face and a distal face;
   contouring the proximal face of the article to form a contoured proximal face;
   contouring the distal face of the article to form a contoured distal face; and
   securing the contoured proximal face of the article to one of a first end wall and a second end wall of the component;
   wherein, prior to the step of securing, the contoured proximal face substantially mirrors a contour of at least one of the first end wall and the second end wall of the component; and
   wherein, after the step of securing, the contoured distal face forms an exterior surface over at least one of the first end wall and the second end wall, the exterior surface including a modified surface characteristic.
19. The method of any preceding clause, wherein the step of contouring the proximal face provides a closer tolerance between the contoured proximal face and at least one of the first end wall and the second end wall prior to the step of securing.
20. The method of any preceding clause, further comprising:
   prior to the step of securing, forming at least one groove in a portion of the component selected from the group consisting of the contoured proximal face, the first end wall, the second end wall, and combinations thereof;
   wherein, after the step of securing, the at least one groove forms a cooling channel in the component.

## Claims

1. An article (201) comprising:
a pre-sintered preform having:
a contoured proximal face (202); and
a contoured distal face (203);
wherein the contoured proximal face (202) is arranged and disposed to substantially mirror a contour of an end wall of a component (100); and
wherein the contoured distal face (203) is arranged and disposed to form an exterior surface, the exterior surface including a modified surface characteristic.

2. The article (201) of claim 1, wherein a contour of the contoured distal face (203) differs from a contour of the contoured proximal face (202).

3. The article (201) of claim 1 or 2, wherein the modified surface characteristic includes an aerodynamic surface.

4. The article (201) of claim 1, 2 or 3, wherein the contoured proximal face (202) further comprises at least one groove (703) formed therein, the groove (703) being arranged and disposed to form a cooling channel when the article (201) is positioned over the end wall.

5. A component (100) comprising:
a first end wall (105);
a second end wall (107); and
an article (201) secured to at least one of the first end wall (105) and the second end wall (107), the article (201) comprising a pre-sintered preform having:
a contoured proximal face (202); and
a contoured distal face (203);
wherein the contoured proximal face (202) substantially mirrors a contour of at least one of the first end wall (105) and the second end wall (107); and
wherein the contoured distal face (203) is arranged and disposed to form an exterior surface over the first end wall (105) or the second end wall (107), the exterior surface including a modified surface characteristic.

6. The component (100) of claim 5, further comprising at least one groove (703) formed in a portion of the component (100) selected from the group consisting of the first end wall (105), the second end wall (107), the contoured proximal face (202), and combinations thereof.

7. The component (100) of claim 5 or 6, where the component (100) is a hot gas path component of a gas turbine.

8. A method of making a component (100), the method comprising:
forming an article (201) including a pre-sintered preform having a proximal face and a distal face;
contouring the proximal face of the article (201) to form a contoured proximal face (202);
contouring the distal face of the article (201) to form a contoured distal face (203); and
securing the contoured proximal face (202) of the article (201) to one of a first end wall (105) and a second end wall (107) of the component (100);
wherein, prior to the step of securing, the contoured proximal face (202) substantially mirrors a contour of at least one of the first end wall (105) and the second end wall (107) of the component (100); and
wherein, after the step of securing, the contoured distal face (203) forms an exterior surface over at least one of the first end wall (105) and the second end wall (107), the exterior surface including a modified surface characteristic.

9. The method of claim 8, wherein the step of contouring the proximal face provides a closer tolerance between the contoured proximal face (202) and at least one of the first end wall (105) and the second end wall (107) prior to the step of securing.

10. The method of claim 8 or 9, further comprising:
prior to the step of securing, forming at least one groove (703) in a portion of the component (100) selected from the group consisting of the contoured proximal face (202), the first end wall (105), the second end wall (107), and combinations thereof;
wherein, after the step of securing, the at least one groove (703) forms a cooling channel in the component (100).
